Europäisches Patentamt

European Patent Office

Office européen des brevets

(19)

(11) EP 1 354 070 B1

(12) FASCICULE DE BREVET EUROPEEN

(45) Date de publication et mention
de la délivrance du brevet:
**02.06.2004 Bulletin 2004/23**

(21) Numéro de dépôt: 02706824.6

(22) Date de dépôt: **21.01.2002**

(51) Int Cl.$^7$: **C21D 8/04**, C22C 38/04,
C22C 38/06

(86) Numéro de dépôt international:
**PCT/FR2002/000225**

(87) Numéro de publication internationale:
**WO 2002/059384 (01.08.2002 Gazette 2002/31)**

(54) **ACIER ISOTROPE A HAUTE RESISTANCE, PROCEDE DE FABRICATION DE TOLES ET TOLES OBTENUES**

ISOTROPISCHER HOCHFESTER STAHL, VERFAHREN ZUR HERSTELLUNG VON BLECHEN UND HERGESTELLTE BLECHE

HIGH-STRENGTH ISOTROPIC STEEL, METHOD FOR MAKING STEEL PLATES AND RESULTING PLATES

(84) Etats contractants désignés:
**AT BE CH CY DE DK ES FI FR GB GR IE IT LI LU
MC NL PT SE TR**

(30) Priorité: **26.01.2001 FR 0101126**

(43) Date de publication de la demande:
**22.10.2003 Bulletin 2003/43**

(73) Titulaire: **USINOR**
**92800 Puteaux (FR)**

(72) Inventeurs:
• **MARSAL, Joel**
**F-57570 Beyren les Sierck (FR)**

• **MESCOLINI, Dominique**
**F-57000 Metz (FR)**

(74) Mandataire: **Lagrange, Jacques et al**
**Cabinet Lavoix**
**2, place d'Estienne d'Orves**
**75441 Paris Cedex 09 (FR)**

(56) Documents cités:
**EP-A- 0 475 096          EP-A- 0 510 718
EP-A- 0 870 848          EP-A- 0 905 267
DE-A- 19 701 443        US-A- 6 162 308**

**Description**

La présente invention concerne un acier et une tôle en acier isotrope à haute résistance présentant des propriétés mécaniques améliorées et apte à subir un traitement thermique sans vieillissement.

Ce type d'acier est notamment utilisé pour la fabrication de pièces d'aspect pour l'automobile comportant un revêtement organique.

Ces pièces sont généralement mises en forme par emboutissage, ce qui suppose que l'acier présente un bon niveau de ductilité, et soit le plus isotrope possible pour obtenir un bon tendu de pièces. En outre, on recherche également une bonne résistance à l'indentation, ce qui peut être obtenu grâce à une limite d'élasticité élevée.

Avant cette étape de mise en forme, les pièces sont recouvertes de revêtements organiques que l'on fait cuire au cours d'un traitement thermique déterminé, dont la température maximale est actuellement de l'ordre de 250°C pour une durée proche de 30 secondes.

Or, ce type de traitement thermique peut conduire à un phénomène de vieillissement de l'acier qui se traduit par une augmentation de la limite d'élasticité, une réduction de la ductilité et surtout par l'apparition d'un palier de limite d'élasticité. L'existence de ce palier n'est pas acceptable car il est à l'origine de l'apparition de vermiculures très visibles lors de l'emboutissage, donnant des défauts d'aspect rédhibitoires.

Ainsi, d'après EP 0 870 848, on connaît un acier au niobium extra doux et calmé à l'aluminium qui présente de bonnes propriétés de résistance mécanique ainsi que de bonnes propriétés de ductilité, mais qui est sujet au phénomène de vieillissement qui vient d'être décrit, et est donc inapte au dépôt d'un revêtement nécessitant un traitement thermique avant emboutissage.

La présente invention a donc pour but de mettre à disposition un matériau métallique isotrope présentant simultanément une limite d'élasticité élevée sans palier, une bonne ductilité et pouvant subir un traitement thermique consécutif au dépôt d'un revêtement organique sans vieillissement.

A cet effet, un premier objet de l'invention est constitué par un acier dont la composition comprend, exprimés en % en poids :

$$0,03 \leq C \leq 0,06$$

$$0,50 \leq Mn \leq 1,10$$

$$0,08 \leq Si \leq 0,20$$

$$0,015 \leq Al \leq 0,070$$

$$N \leq 0,007$$

$$Ni \leq 0,040$$

$$Cu \leq 0,040$$

$$P \leq 0,035$$

$$S \leq 0,015$$

$$Mo \leq 0,008$$

$$Ti \leq 0,005$$

étant entendu qu'elle comprend également du bore en une quantité telle que :

$$0,65 \leq \frac{B}{N} \leq 1,60$$

le reste de la composition étant constitué de fer et d'impuretés résultant de l'élaboration.

Les présents inventeurs ont en effet découvert que l'équilibre particulier des teneurs en éléments d'alliages permettait d'obtenir de façon surprenante une nuance d'acier présentant l'ensemble des propriétés recherchées.

La teneur en carbone de la composition selon l'invention est comprise entre 0,03 et 0,06% en poids, car cet élément abaisse sensiblement la ductilité. Il est cependant nécessaire d'en avoir un minimum de 0,03% en poids pour éviter tout problème de vieillissement.

La teneur en manganèse de la composition selon l'invention doit être comprise entre 0,50 et 1,10% en poids. Le manganèse améliore la limite d'élasticité de l'acier tout en réduisant fortement sa ductilité. Il diminue également la tendance au vieillissement. En dessous de 0,50% en poids, on observe des problèmes de vieillissement, tandis que au-delà de 1,10% en poids, il nuit trop à la ductilité.

La teneur en silicium de la composition selon l'invention doit être comprise entre 0,08 et 0,20 % en poids. Il améliore fortement la limite d'élasticité de l'acier tout en réduisant faiblement sa ductilité, mais augmente sensiblement sa tendance au vieillissement. Si sa teneur est inférieure à 0,08% en poids, l'acier ne présente pas de bonnes caractéristiques mécaniques, tandis que si elle dépasse 0,20% en poids, on se heurte à des problèmes d'aspect de surfaces sur lesquelles apparaissent des tigrages.

Dans un mode de réalisation préféré de l'invention, le rapport de la teneur en manganèse par rapport à la teneur en silicium est compris entre 4 et 15 afin d'éviter tout problème de fragilité de soudure par étincelage. En effet, si on se place en dehors de ces valeurs, on observe la formation d'oxydes fragilisants lors de cette opération de soudage.

Dans un autre mode de réalisation préféré de l'invention, la teneur en manganèse est comprise entre 0,55 et 0,65% en poids et la teneur en silicium est comprise entre 0,08 et 0,12% en poids. Ce mode de réalisation permet d'obtenir des nuances présentant une ductilité améliorée, ainsi qu'une limite d'élasticité supérieure à 220 MPa.

Dans un autre mode de réalisation préféré de l'invention, la teneur en manganèse est comprise entre 0,95 et 1,05% en poids et la teneur en silicium est comprise entre 0,16 et 0,20% en poids. Ce mode de réalisation permet d'obtenir des nuances à ductilité importante présentant une résistance à la traction améliorée, ainsi qu'une limite d'élasticité supérieure à 260 MPa.

La teneur en azote de la composition doit être inférieure à 0,007% en poids, de préférence inférieure à 0,005% en poids, car cet élément est néfaste pour les propriétés mécaniques de l'acier. Sa présence dans l'acier selon l'invention résulte de l'élaboration.

La teneur en bore de la composition selon l'invention doit être telle que :

$$0,65 \leq \frac{B}{N} \leq 1,60.$$

Le bore a pour fonction principale de fixer l'azote par précipitation précoce de nitrures de bore. Il doit donc être présent en quantité suffisante pour éviter qu'une trop grande quantité d'azote demeure libre, sans toutefois dépasser trop la quantité stoechiométrique car la quantité résiduelle libre pourrait poser des problèmes métallurgiques ainsi qu'une coloration des rives de bobine. A titre indicatif, on mentionnera que la stoechiométrie stricte est atteinte pour un rapport B/N de 0,77.

La teneur en aluminium de la composition selon l'invention est comprise entre 0,015 et 0,070 % en poids, sans qu'elle présente une importance critique. L'aluminium est présent dans la nuance selon l'invention du fait du procédé de coulée au cours duquel on ajoute cet élément pour désoxyder l'acier. Il importe cependant de ne pas dépasser 0,070% en poids car on rencontrerait alors de problèmes d'inclusions d'oxydes d'aluminium, néfastes pour les caractéristiques mécaniques de l'acier.

Le phosphore est limité dans l'acier selon l'invention à une teneur inférieure à 0,035 % en poids, de préférence inférieure à 0,015 % en poids. Il permet d'augmenter la limite d'élasticité de la nuance, mais il augmente parallèlement sa tendance au vieillissement dans les traitements thermiques, ce qui explique sa limitation. Il est également néfaste pour la ductilité.

La teneur en titane de la composition doit être inférieure à 0,005% en poids, celle en soufre doit être inférieure à 0,015 % en poids, celle en nickel doit être inférieure à 0,040% en poids, celle en cuivre doit être inférieure à 0,040% en poids et celle en molybdène doit être inférieure à 0,008% en poids. Ces différents éléments constituent en réalité les éléments résiduels issus de l'élaboration de la nuance que l'on rencontre le plus souvent. On limite leurs teneurs car ils sont susceptibles de former des inclusions qui diminuent les caractéristiques mécaniques de la nuance.

Un deuxième objet de l'invention consiste en un procédé de fabrication d'une tôle de composition conforme à l'invention, comprenant:

- l'élaboration de l'acier et la coulée d'une brame,
- un laminage à chaud de cette brame pour obtenir une tôle, la température de fin de laminage étant supérieure à celle du point Ar3,
- un bobinage de la tôle à une température comprise entre 500 et 700°C,
- un laminage à froid de la tôle avec un taux de réduction de 50 à 80%,
- un traitement thermique de recristallisation,
- un écrouissage réalisé avec un taux de skin-pass compris de préférence entre 1,2 à 2,5%.

La composition selon l'invention peut être élaborée de façon classique et par tout procédé adapté.

A l'issue de l'élaboration, l'acier peut être coulé sous forme d'un demi-produit, comme une brame, que l'on réchauffe à une température de l'ordre de 1230°C à 1260°C environ pour la laminer à chaud, la température de fin de laminage étant supérieure à Ar3, qui est ici de l'ordre de 810°C. On obtient ainsi une tôle. La température de fin de laminage est de préférence inférieure à celle du point Ar3 augmentée de 20°C. Après cette opération, on peut procéder au bobinage de la tôle ainsi produite à une température comprise entre 500 et 700°C.

Dans un mode de réalisation préféré, on bobine la tôle à une température comprise entre 580 et 620°C, afin de limiter la taille de grains, ce qui permet d'augmenter la limite d'élasticité.

La tôle est ensuite laminée à froid avec un taux de réduction de 50 à 80%, de préférence de 60 à 78%, et subit un traitement thermique de recristallisation comprenant, de préférence, une première étape de recuit statique sous hydrogène à une température supérieure à la température de recristallisation de l'acier pendant 5 à 15 heures. A titre indicatif, cette température de recristallisation de la nuance est généralement comprise entre 540 et 570°C. Ce recuit est effectué sous hydrogène afin d'éviter tout problème de coloration des rives de la tôle.

Le traitement thermique de recristallisation comprend en outre, de préférence, une deuxième étape de refroidissement statique lent effectué en une durée de plus de 30 heures, de façon particulièrement préférée supérieure ou égale à 40 heures. Ce refroidissement est effectué lentement afin de s'assurer de la parfaite stabilité des précipités de cémentite dans la matrice ferritique. C'est pour cette même raison qu'on le réalise de manière statique ce qui permet d'obtenir ce type de refroidissement lent.

Il reste cependant parfaitement possible de réaliser un refroidissement plus rapide et d'obtenir les résultats recherchés dans la présente invention.

Les tôles peuvent ensuite être soumises à un écrouissage avec un skin-pass compris de préférence entre 1,2 et 2,5%, et par exemple de l'ordre de 1,5%, qui permet de réduire au maximum tout palier de limite d'élasticité résiduel. Il est préférable de ne pas dépasser un taux de 2,5% car on dégrade la ductilité, mais il est également préférable de ne pas descendre en dessous de 1,2% pou éviter tout problème de vieillissement.

On peut ensuite procéder au dépôt d'un revêtement organique et au traitement thermique nécessaire à sa bonne fixation. Un tel traitement peut, par exemple, consister en un chauffage rapide jusqu'à 250°C avec maintien à cette température pendant 30 secondes environ, suivi d'un refroidissement.

Pour pouvoir comparer entre eux deux traitements thermiques effectués à des températures différentes pendant des temps différents, on utilise une grandeur appelée PAREQ qui est définie par :

$$PAREQ = -0,76 \times \log(\int \exp(-\Delta H/RT).dt)$$

avec $\Delta H$: énergie de diffusion du carbone dans le fer (environ 112 kJ/mol)
    $T$ : température du cycle,
que l'on intègre sur la durée du traitement thermique.

Plus le traitement thermique est chaud ou long, plus la valeur du PAREQ est basse. Deux traitements thermiques différents, ayant une valeur de PAREQ identique, aboutiront au même résultat sur une même nuance d'acier.

Si on considère un traitement thermique portant l'acier à 250°C avec un maintien de 30 secondes à cette température, la valeur de PAREQ est de 10,26. Dans le cadre de la présente invention, on s'intéresse plus particulièrement aux traitements thermiques ayant une valeur de PAREQ comprise entre 9,80 et 11,5.

Les revêtements organiques dont il est question dans la présente invention désignent, de préférence, des revêtements comprenant une résine réticulable et éventuellement des billes de métal comme le zinc, par exemple. Ces revêtements sont généralement déposés en couche mince de l'ordre de quelques microns et servent notamment à protéger l'acier contre la corrosion.

Si l'acier selon l'invention est plus particulièrement destiné à recevoir ce type de revêtement, il est bien entendu qu'il pourra être utilisé dans toute application nécessitant de résister à des traitements thermiques de PAREQ compris entre 9,80 et 11,50, que ce soit à la suite de l'application d'un revêtement de nature quelconque ou pas.

Un troisième objet de l'invention est constitué par les tôles d'acier isotrope de composition conforme à la présente invention et par les tôles obtenues par la mise en oeuvre du procédé selon l'invention dans ses différentes variantes.

On préfère les tôles d'acier isotrope dont l'acier comprend une teneur en manganèse comprise entre 0,55 et 0,65% en poids et une teneur en silicium comprise entre 0,08 et 0,12% en poids et qui présentent, après avoir subi un traitement thermique ayant une valeur de PAREQ comprise entre 9,8 et 11,5, une limite élastique supérieure à 220 MPa, un allongement supérieur à 36% et un coefficient d'écrouissage supérieur à 0,20.

On préfère également les tôles d'acier isotrope dont l'acier comprend une teneur en manganèse comprise entre 0,95 et 1,05% en poids et une teneur en silicium comprise entre 0,16 et 0,20% en poids et qui présentent, après avoir subi un traitement thermique ayant une valeur de PAREQ comprise entre 9,8 et 11,5, une limite élastique supérieure à 260 MPa, une résistance à la traction supérieure à 400 MPa ainsi qu'un coefficient d'écrouissage supérieur à 0,18.

La présente invention va être illustrée à partir des exemples qui suivent, le tableau ci-dessous donnant la composition des différents aciers testés en % en poids, parmi lesquels, les coulées 1 à 3 sont conformes à la présente invention tandis que la coulée 4 est utilisée à titre de comparaison :

|     | Coulée 1 | Coulée 2 | Coulée 3 | Coulée 4 |
| --- | --- | --- | --- | --- |
| C   | 0,041 | 0,045 | 0,038 | 0,025 |
| Mn  | 0,853 | 0,989 | 0,598 | 0,227 |
| Si  | 0,089 | 0,167 | 0,088 | 0,006 |
| N   | 0,0035 | 0,0042 | 0,0032 | 0,0041 |
| B   | 0,0026 | 0,0029 | 0,0051 | - |
| Al  | 0,035 | 0,031 | 0,038 | 0,050 |
| P   | 0,007 | 0,0065 | 0,007 | 0,006 |
| S   | 0,011 | 0,0056 | 0,01 | 0,012 |
| Cu  | 0,018 | 0,025 | 0,012 | 0,010 |
| Ni  | 0,020 | 0,022 | 0,019 | 0,017 |
| Cr  | - | 0,028 | - | 0,032 |
| Ti  | 0,0012 | 0,001 | - | 0,002 |
| Nb  | - | - | - | 0,016 |
| Mo  | 0,0012 | - | 0,008 | - |

Le reste de la composition des coulées 1 à 4 est bien entendu constitué de fer et d'éventuellement impuretés résultant de l'élaboration.

Abréviations employées

A :    allongement à la rupture en %
Re :    limite d'élasticité en MPa
Rm :    résistance à la traction en MPa
n :    coefficient d'écrouissage
$\Delta r$ :    coefficient d'anisotropie plane
r :    coefficient d'anisotropie

Exemple 1 - Limite d'élasticité et résistance à la traction

On fabrique une tôle d'acier ayant la composition de chacune des coulées 1 à 3 conformes à l'invention ainsi que de la coulée 4 comparative, en coulant une brame que l'on réchauffe à 1230°C environ puis que l'on lamine à chaud, avec une fin de température de laminage de 860°C en moyenne. On bobine à une température de 585°C environ, puis on lamine à froid avec un taux de réduction de 73%. On procède ensuite à un recuit sous hydrogène à 630°C environ pendant 7 heures, suivi d'un refroidissement lent pendant 30 heures. On termine le processus par un écrouissage avec un taux de skin pass de 1,5%.

On réalise alors un premier essai en traction dans le sens travers de laminage selon la norme NF EN 10002-1 sur des échantillons prélevés en début et en fin de bobine.

On soumet ensuite la tôle à un traitement thermique ayant un PAREQ de 10,26 et on procède à un deuxième essai en traction selon la norme NF EN 10002-1. Ce traitement thermique consiste en un chauffage à 250°C à une vitesse de chauffage de 35°C par seconde suivi d'un maintien pendant 30 secondes à cette température.

On détermine ainsi les valeurs de limite d'élasticité et de résistance mécanique de la tôle et l'on obtient les résultats suivants :

|  | Coulée 1 | | Coulée 2 | | Coulée 3 | | Coulée 4 | |
|---|---|---|---|---|---|---|---|---|
|  | Re (MPa) | Rm (MPa) | Re (MPa) | Rm (MPa) | Re (MPa) | Rm (MPa) | Re (MPa) | Rm (MPa) |
| Avant traitement thermique | 241 | 373 | 258 | 400 | 243 | 357 | 262 | 353 |
| Après traitement thermique | 247 | 380 | 266 | 396 | 240 | 355 | 329 | 355 |

On voit que les niveaux de Re et de Rm des coulées 1 à 3 selon l'invention ne sont pas dégradés par le traitement thermique, ce qui confirme l'aptitude de l'acier selon la présente invention à subir un tel traitement.

On constate également les excellentes valeurs obtenues pour la coulée 2 selon l'invention, qui atteint une limite d'élasticité supérieure à 260 MPa et une résistance à la traction de 400 MPa.

Exemple 2 - Ductilité

Grâce aux mêmes essais de traction que ceux pratiqués dans l'exemple 1, on détermine classiquement l'allongement à la rupture A, et le coefficient d'écrouissage n pour les quatre coulées.

Les courbes de traction montrent tout d'abord qu'aucun palier de limite d'élasticité n'a été observé pour les coulées 1 à 3 selon l'invention, que ce soit avant ou après le traitement thermique. Par contre, la coulée 4 comparative qui montrait déjà un petit palier avant le traitement thermique présente un palier de plus de 10% après ce même traitement, ce qui la rend totalement impropre aux objectifs poursuivis par la présente invention.

Les autres résultats sont rassemblés dans le tableau suivant :

|  | Coulée 1 | | Coulée 2 | | Coulée 3 | | Coulée 4 | |
|---|---|---|---|---|---|---|---|---|
|  | A (%) | n | A (%) | n | A (%) | n | A (%) | n |
| Avant traitement thermique | 34,7 | 0,198 | 32,3 | 0,195 | 35,6 | 0,207 | 35,5 | 0,192 |
| Après traitement thermique | 34,9 | 0,190 | 34,3 | 0,180 | 36,5 | 0,202 | 34,7 | 0,216 |

EP 1 354 070 B1

A la lecture de ces résultats, on constate notamment de bonnes valeurs d'allongement à la rupture, ce qui permet de garantir la bonne fabrication par emboutissage des pièces. On obtient également un bon coefficient d'écrouissage n qui garantit l'obtention d'un bon niveau de limite d'élasticité pour les pièces finies, par effet de consolidation par écrouissage lors de l'emboutissage (effet appelé "Work Hardening").

On constate également que la coulée 3 selon l'invention présente d'excellentes valeurs de ductilité, aussi bien pour l'allongement à la rupture que pour le coefficient d'écrouissage.

Les valeurs obtenues pour la coulée 4 comparative sont données à titre indicatif, car ces valeurs ne sont pas significatives en présence d'un palier de plus de 10%.

Exemple 3 - Isotropie

L'anisotropie global d'un acier est déterminée par le coefficient d'anisotropie normale moyen r :

$$r = \frac{r(0)+r(90)+2r(45)}{4}$$

où r(0), r(90) et r(45) sont les valeurs des coefficients d'anisotropie normale r dans les directions longitudinale, transversale et oblique à 45°, au sens de laminage.

Le coefficient d'anisotropie planaire $\Delta r$ peut être défini par :

$$\Delta r = \frac{r(0)+r(90)-2r(45)}{2}$$

On détermine ces coefficients sur les tôles avant et après qu'elles soient soumises à un traitement thermique analogue à celui décrit dans l'exemple 1. Les résultats sont rassemblés dans le tableau suivant :

|  | Coulée 1 | | Coulée 2 | | Coulée 3 | | Coulée 4 | |
|---|---|---|---|---|---|---|---|---|
|  | r | $\Delta r$ | r | $\Delta r$ | r | $\Delta r$ | r | $\Delta r$ |
| Avant traitement thermique | 1,27 | 0,17 | 1,25 | 0,11 | 1,30 | 0,25 | 1,33 | 0,19 |
| Après traitement thermique | 1,25 | 0,20 | 1,23 | 0,11 | 1,26 | 0,24 | 1,47 | 0,21 |

Les valeurs obtenues pour la coulée 4 comparative sont données à titre indicatif, car ces valeurs ne sont pas significatives en présence d'un palier de plus de 10%.

On constate que l'isotropie des coulées d'acier selon l'invention est en moyenne bonne et les rend aptes à subir un emboutissage profond, la coulée 2 présentant une valeur de $\Delta r$ particulièrement remarquable.

En effet, les présents inventeurs ont constaté que les nitrures de bore formés de façon contrôlée dans l'acier précipitent sur la tôle à chaud et ne viennent pas perturber la recristallisation ultérieure. La tôle selon l'invention présente ainsi une structure micrographique de grains dont l'élongation est proche de 1 et des valeurs du coefficient d'anisotropie r basses.

**Revendications**

**1.** Acier dont la composition comprend, exprimés en % en poids :

$$0,03 \leq C \leq 0.06$$

$$0,50 \leq Mn \leq 1,10$$

$$0,08 \leq Si \leq 0,20$$

$$0,015 \leq Al \leq 0,070$$

$$N \leq 0,007$$

$$Ni \leq 0,040$$

$$Cu \leq 0,040$$

$$P \leq 0,035$$

$$S \leq 0,015$$

$$Mo \leq 0,008$$

$$Ti \leq 0,005$$

étant entendu qu'elle comprend également du bore en une quantité telle que :

$$0,65 \leq \frac{B}{N} \leq 1,60$$

le reste de la composition étant constitué de fer et d'impuretés résultant de l'élaboration.

2. Acier selon la revendication 1, **caractérisé en ce qu'**en outre, la teneur en manganèse et la teneur en silicium sont telles que :

$$4 \leq \frac{\%Mn}{\%Si} \leq 15$$

3. Acier selon la revendication 1 ou 2, **caractérisé en ce que**, en outre, la teneur en manganèse est comprise entre 0,55 et 0,65% en poids et la teneur en silicium est comprise entre 0,08 et 0,12% en poids.

4. Acier selon la revendication 1 ou 2, **caractérisé en ce que**, en outre, la teneur en manganèse est comprise entre 0,95 et 1,05% en poids et la teneur en silicium est comprise entre 0,16 et 0,20% en poids.

5. Acier selon l'une quelconque des revendications 1 à 4, **caractérisé en ce que**, en outre, la teneur en azote est inférieure à 0,005% en poids.

6. Acier selon l'une quelconque des revendications 1 à 5, **caractérisé en ce que**, en outre, la teneur en phosphore est inférieure à 0,015% en poids.

7. Procédé de fabrication d'une tôle de composition conforme à l'une quelconque des revendications 1 à 6, comprenant :

- l'élaboration de l'acier et la coulée d'une brame,
- un laminage à chaud de cette brame pour obtenir une tôle, la température de fin de laminage étant supérieure à celle du point Ar3,

- un bobinage de la tôle à une température comprise entre 500 et 700°C,
- un laminage à froid de la tôle avec un taux de réduction de 50 à 80%, de préférence de 60 à 78%,
- un traitement thermique de recristallisation,
- un écrouissage réalisé avec un taux de skin-pass compris de préférence entre 1,2 et 2,5%.

8. Procédé selon la revendication 7, **caractérisé en ce que** ledit traitement thermique de recristallisation est un recuit statique sous hydrogène effectué à une température supérieure à la température de recristallisation de l'acier pendant 5 à 15 heures, suivi d'un refroidissement statique lent effectué en une durée de plus de 30 heures.

9. Procédé selon la revendication 7 ou 8, **caractérisé en ce que** l'on dépose sur la tôle écrouie un revêtement organique, puis qu'on fait subir à la tôle revêtue un traitement thermique dont le PAREQ est compris entre 9,80 et 11,5, le PAREQ étant défini par :

$$PAREQ = -0,76 \times \log(\int \exp(-\Delta H/RT).dt)$$

avec
$\Delta H$ : énergie de diffusion du carbone dans le fer
$T$ : température du cycle
$t$ : durée du traitement thermique

10. Procédé selon la revendication 9, **caractérisé en ce que** ledit revêtement organique est à base de résine réticulable et comprend des billes de métal.

11. Tôle d'acier isotrope de composition conforme à l'une quelconque des revendications 1 à 6.

12. Tôle d'acier isotrope obtenue par la mise en oeuvre du procédé selon l'une quelconque des revendications 7 à 10.

13. Tôle d'acier isotrope selon la revendication 11 ou 12, **caractérisée en ce que** l'acier comprend une teneur en manganèse comprise entre 0,55 et 0,65% en poids et une teneur en silicium est entre 0,08 et 0,12% en poids, et **en ce qu'**elle présente, après avoir subi un traitement thermique ayant une valeur de PAREQ comprise entre 9,8 et 11,5, une limite élastique supérieure à 220 MPa, un allongement supérieur à 36% et un coefficient d'écrouissage supérieur à 0,20.

14. Tôle d'acier isotrope selon la revendication 11 ou 12, **caractérisée en ce que** l'acier comprend une teneur en manganèse comprise entre 0,95 et 1,05% en poids et une teneur en silicium comprise entre 0,16 et 0,20% en poids, et **en ce qu'**elle présente, après avoir subi un traitement thermique ayant une valeur de PAREQ comprise entre 9,8 et 11,5, une limite élastique supérieure à 260 MPa, et une résistance à la traction supérieure à 400 MPa ainsi qu'un coefficient d'écrouissage supérieur à 0,18.

**Patentansprüche**

1. Stahl, dessen Zusammensetzung, ausgedrückt in Gew.%, umfasst:

$$0,03 \leq C \leq 0,06 .$$

$$0,50 \leq Mn \leq 1,10$$

$$0,08 \leq Si \leq 0,20$$

$$0,015 \leq Al \leq 0,070$$

$$N \leq 0,007$$

$$Ni \leq 0,040$$

$$Cu \leq 0,040$$

$$P \leq 0,035$$

$$S \leq 0,015$$

$$Mo \leq 0,008$$

$$Ti \leq 0,005,$$

wobei er selbstverständlich auch Bor in einer solchen Menge umfasst, dass

$$0,65 \leq \frac{B}{N} \leq 1,60,$$

wobei der Rest der Zusammensetzung aus Eisen und durch die Verarbeitung hervorgerufenen Verunreinigungen besteht.

2. Stahl nach Anspruch 1, **dadurch gekennzeichnet, dass** ferner der Gehalt an Mangan und der Gehalt an Silizium derart sind, dass:

$$4 \leq \frac{\%Mn}{\%Si} \leq 15$$

3. Stahl nach Anspruch 1 oder 2, **dadurch gekennzeichnet, dass** ferner der Gehalt an Mangan zwischen 0,55 und 0,65 Gew.% ist und der Gehalt an Silizium zwischen 0,08 und 0,12 Gew.% ist.

4. Stahl nach Anspruch 1 oder 2, **dadurch gekennzeichnet, dass** ferner der Gehalt an Mangan zwischen 0,95 und 1,05 Gew.% ist und der Gehalt an Silizium zwischen 0,16 und 0,20 Gew.% ist.

5. Stahl nach einem der Ansprüche 1 bis 4, **dadurch gekennzeichnet, dass** ferner der Gehalt an Stickstoff kleiner als 0,005 Gew.% ist.

6. Stahl nach einem der Ansprüche 1 bis 5, **dadurch gekennzeichnet, dass** ferner der Gehalt an Phosphor kleiner als 0,015 Gew.% ist.

7. Verfahren zur Herstellung eines Blechs mit einer Zusammensetzung nach einem der Ansprüche 1 bis 6, umfassend:

   - Bearbeitung des Stahls und Gießen einer Bramme,
   - Heißwalzen der Bramme, um ein Blech zu erhalten, wobei die Endtemperatur des Walzens höher als diejenige am Punkt Ar3 ist,
   - Wickeln des Blechs bei einer Temperatur zwischen 500 und 700°C,
   - Kaltwalzen des Blechs mit einem Reduktionsgrad von 50 bis 80%, vorzugsweise 60 bis 78%,
   - eine thermische Umkristallisationsbehandlung,
   - Nachwalzen, das mit einem Dressiergrad von vorzugsweise zwischen 1,2 und 2,5% durchgeführt wird.

8.  Verfahren nach Anspruch 7, **dadurch gekennzeichnet, dass** die thermische Umkristallisationsbehandlung ein statisches Ausglühen unter Wasserstoff ist, das bei einer Temperatur über der Umkristallisationstemperatur des Stahls für 5 bis 15 Stunden durchgeführt wird, gefolgt von langsamem statischem Abkühlen, das für eine Dauer von mehr als 30 Stunden durchgeführt wird.

9.  Verfahren nach Anspruch 7 oder 8, **dadurch gekennzeichnet, dass** man auf das nachgewalzte Blech eine organische Beschichtung aufbringt und dann das beschichtete Blech einer thermischen Behandlung unterwirft, so dass PAREQ zwischen 9,80 und 11,5 ist, wobei PAREQ definiert ist durch:

$$PAREQ = -0,76 \times \log(\textstyle\int \exp(-\Delta H/RT) \cdot dt)$$

wobei:

$\Delta H$: Diffusionsenergie von Kohlenstoff im Eisen
T: Zyklustemperatur
t: Dauer der thermischen Behandlung

10. Verfahren nach Anspruch 9, **dadurch gekennzeichnet, dass** die organische Beschichtung auf einem vernetzbaren Harz basiert und Metallkügelchen umfasst.

11. Isotropes Stahlblech mit einer Zusammensetzung gemäß einem der Ansprüche 1 bis 6.

12. Isotropes Stahlblech, das mittels Durchführung des Verfahrens nach einem der Ansprüche 7 bis 10 erhalten wird.

13. Isotropes Stahlblech nach Anspruch 11 oder 12, **dadurch gekennzeichnet, dass** der Stahl einen Mangangehalt zwischen 0,55 und 0,65 Gew.% umfasst, und ein Siliziumgehalt zwischen 0,08 und 0,12 Gew.% ist, und dadurch dass er, nachdem er einer thermischen Behandlung unterworfen wurde, einen PAREQ-Wert zwischen 9,8 und 11,5, eine Elastizitätsgrenze über 220 MPa, eine Verlängerung von mehr als 36% und einen Nachwalzkoeffizienten über 0,20 hat.

14. Isotropes Stahlblech nach Anspruch 11 oder 12, **dadurch gekennzeichnet, dass** der Stahl einen Mangangehalt zwischen 0,95 und 1,05 Gew.% und einen Siliziumgehalt zwischen 0,16 und 0,20 Gew.% umfasst, und dadurch dass er, nachdem er einer thermischen Behandlung unterworfen wurde, einen PAREQ-Wert zwischen 9,8 und 11,5, eine Elastizitätsgrenze über 260 MPa, eine Zugfestigkeit von mehr als 400 MPa sowie einen Nachwalzkoeffizienten über 0,18 hat.

**Claims**

1.  Steel, the composition of which comprises, expressed in % by weight:

$$0.03 \leq C \leq 0.06$$

$$0.50 \leq Mn \leq 1.10$$

$$0.08 \leq Si \leq 0.20$$

$$0.015 \leq Al \leq 0.070$$

$$N \leq 0.007$$

Ni ≤0.040

Cu ≤0.040

P ≤0.035

S ≤0.015

Mo ≤0.008

Ti ≤0.005

provided that it also comprises boron in a quantity such that:

$$0.65 \le \frac{B}{N} \le 1.60,$$

the rest of the composition consisting of iron and impurities resulting from preparation.

2. Steel as claimed in Claim 1, **characterised in that**, furthermore, the manganese content and the silicon content are such that:

$$4 \le \frac{\% Mn}{\% Si} \le 15.$$

3. Steel as claimed in Claim 1 or 2; **characterised in that**, furthermore, the manganese content is between 0.55 and 0.65% by weight and the silicon content is between 0.08 and 0.12% by weight.

4. Steel as claimed in Claim 1 or 2, **characterised in that**, furthermore, the manganese content is between 0.95 and 1.05% by weight and the silicon content is between 0.16 and 0.20% by weight.

5. Steel as claimed in any one of Claims 1 to 4, **characterised in that**, furthermore, the nitrogen content is less than 0.005% by weight.

6. Steel as claimed in any one of Claims 1 to 5, **characterised in that**, furthermore, the phosphorus content is less than 0.015% by weight.

7. Method of manufacturing a sheet having a composition in accordance with any one of Claims 1 to 6, comprising:

- preparation of the steel and casting of a bloom,
- hot-rolling of this bloom in order to obtain a sheet, the temperature at the end of rolling being higher than that of the point Ar3,
- coiling of the sheet at a temperature between 500 and 700°C,
- cold-rolling of the sheet with a reduction rate of 50 to 80%, preferably 60 to 78%,
- recrystallisation heat treatment,
- work hardening carried out with a skin-pass rate preferably between 1.2 and 2.5%.

8. Method as claimed in Claim 7, **characterised in that** the said recrystallisation heat treatment is a static annealing under hydrogen carried out at a temperature higher than the recrystallisation temperature of the steel for 5 to 15 hours, followed by slow static cooling carried out over a period of more than 30 hours.

9. Method as claimed in Claim 7 or 8, **characterised in that** an organic coating is deposited on the work hardened sheet, then the coated sheet is subjected to a heat treatment of which the PAREQ is between 9.80 and 11.5, the PAREQ being defined by:

$$PAREQ = -0.76 \times \log(\int \exp(-\Delta H/RT).dt)$$

with $\Delta H$: energy of diffusion of carbon in iron (approximately 112 kJ/mol),
T: temperature of the cycle,
t: duration of the heat treatment.

10. Method as claimed in Claim 9, **characterised in that** the said organic coating is based on a cross-linkable resin and comprises metal balls.

11. Isotropic steel sheet having a composition in accordance with any one of Claims 1 to 6.

12. Isotropic steel sheet obtained by carrying out the method as claimed in any one of Claims 7 to 10.

13. Isotropic steel sheet as claimed in Claim 11 or 12, **characterised in that** the steel has a manganese content between 0.55 and 0.65% by weight and a silicon content between 0.08 and 0.12% by weight, and **in that** after being subjected to a heat treatment having a PAREQ value between 9.8 and 11.5 it exhibits a yield strength greater than 220 MPa, an elongation greater than 36% and a work-hardening coefficient greater than 0.20.

14. Isotropic steel sheet as claimed in Claim 11 or 12, **characterised in that** the steel has a manganese content between 0.95 and 1.05% by weight and a silicon content between 0.16 and 0.20% by weight, and **in that** after being subjected to a heat treatment having a PAREQ value between 9.8 and 11.5 it exhibits an elastic limit greater than 260 MPa and a tensile strength greater than 400 MPa as well as a work-hardening coefficient greater than 0.18.